Europäisches Patentamt

European Patent Office

Office européen des brevets

(19)

(11) Publication number: **0 032 627**
A2

(12) # EUROPEAN PATENT APPLICATION

(21) Application number: **80304662.2**

(22) Date of filing: **19.12.80**

(51) Int. Cl.³: **C 08 K 5/10**

(30) Priority: **24.12.79  JP 166795/79**

(43) Date of publication of application: **29.07.81**
**Bulletin 81/30**

(84) Designated Contracting States: **BE DE FR GB IT NL**

(71) Applicant: **TOA NENRYO KOGYO K.K.,**
**1-1 Hitotsubashi, 1-Chome Chiyoda-Ku, Tokyo (JP)**

(72) Inventor: **Hoshino, Toshio, 969-31, Ooaza Shimohideya,**
**Okegawa-shi Saitama-ken (JP)**
Inventor: **Hirano, Kazuharu, 1902-5, Ooaza Kamekubo**
**Ooi-machi, Iruma-gun Saitama-ken (JP)**
Inventor: **Matsumura, Toru, 1902-5, Ooaza Kamekubo**
**Ooi-machi, Iruma-gun Saitama-ken (JP)**
Inventor: **Morikubo, Keiichi, 1902-5, Ooaza Kamekubo**
**Ooi-machi, Iruma-gun Saitama-ken (JP)**
Inventor: **Yabune, Masami, 30-10, Nagatasannoudai**
**Minami-ku, Yokohama-shi Kanagawa-ken (JP)**

(74) Representative: **Northover, Robert Frank, P.O. Box 1,**
**Abingdon Oxfordshire OX13 6BB (GB)**

(54) **Thermally stable polyolefin composition and process for its preparation.**

(57) A polyolefin composition comprising a polyolefin and an inorganic filler is given improved thermal stability by that addition of stabilizing amounts of each of a hindered phenol type antioxidant, a sulfur type antioxidant and a fatty acid ester of a neopentyl type polyhydric alcohol.

EP 0 032 627 A2

"THERMALLY STABLE POLYOLEFIN COMPOSITION
AND PROCESS FOR ITS PREPARATION"

The present invention relates to a polyolefin composition comprising a polyolefin and an inorganic filler, which has improved thermal oxidative stability. The invention further relates to a process for thermally stabilizing a polyolefin composition.

While compositions of polyolefins incorporated with inorganic fillers have been developed and put into practice in order to improve mechanical properties and thermal properties of the polyolefins, their thermal properties are not adequate. There have heretofore been proposed many methods of improving properties of polyolefin compositions containing inorganic fillers. Those proposed are, for example, a method to improve physical properties, such as impact strength, of molded products by incorporating a thermally stable filler obtained by coating a powder of an inorganic compound with a fatty acid ester of a polyhydric alcohol (Japanese Patent Laid-Open No. 49254/1977), a method to improve rigidity, impact resistance, thermal aging resistance and heat resisting properties of molded products by adding an inorganic filler based on barium sulfate, talc etc., together with a glycerin fatty acid ester to a crystalline polypropylene resin (Japanese Patent Laid-Open No. 80345/1977) and so forth. However, heat resistant stability cannot be fully improved with these known methods.

This invention seeks to overcome these disadvantages inherent in the hitherto known polyolefin compositions containing inorganic fillers, and is based on the discovery that incorporation of stabilizing amounts of a phenol type antioxidant, a sulfur type antioxidant and a fatty acid ester of a neopentyl type polyhydric alcohol into a mixture of a polyolefin and an inorganic filler provides a polyolefin composition protected from coloring and having excellent heat stability.

In other words, it is a thermally stable polyolefin composition which comprises a polyolefin, an inorganic filler and thermally stabilizing amounts of each of (A) a hindered phenol type antioxidant, (B) a sulfur type antioxidant and (C) a fatty acid ester of a neopentyl type polyhydric alcohol. The amounts of (A), (B) and (C) are preferably about 0.01 to about 5 parts by weight, about 0.02 to about 10 parts by weight and about 0.05 to about 5 parts by weight respectively per 100 parts by weight of a mixture of polyolefin and inorganic filler.

The polyolefin in the present invention can be a homopolymer of an alpha-olefin having 2 to 6 carbon atoms or a copolymer thereof, for example, polyethylene, polypropylene, polybutene-1, poly-4-methyl-pentene-1, an ethylene-propylene random copolymer, an ethylene-propylene block copolymer, etc.

The inorganic filler in the present invention can be any of the various fillers used as fillers for polyolefins, for example, silicate minerals, such as talc, asbestos, mica powder, kaolin, pagodite, diatomaceous earth, calcium silicate, magnesium silicate, aluminum silicate, etc.; sulfates such as barium sulfate, calcium sulfate, etc.; metal oxides such as titanium oxide, silica, alumina, magnesium oxide, zinc oxide, etc.; hydroxides such as aluminum hydroxide, magnesium hydroxide, etc.; and carbonates such as calcium carbonate, magensium carbonate, etc. The particle size of the inorganic filler is suitably such that the average particle diameter is in the range of 0.1 to 30, especially that of 1 to 15$\mu$ being preferred for its good dispersibility.

The hindered phenol type antioxidant employed in the present invention is a compound having a structure in which a tertiary alkyl group is introduced into the ortho position to the OH group of the phenol derivative, and can

- 3 -

0032627

be, for example, 1,3,5-trimethyl-2,4,6-tris(3,5-di-tert-butyl-4-hydroxybenzyl)benzene, tetrakis-[methylene-3-(3',5'-ditert-butyl-4'-hydroxyphenyl)propionate] methane, 1,1,3-tris(methyl-4-hydroxy-5-tert-butylphenyl)-butane, 2,6-di-tert-butylp-cresol, 2,2'-methylenebis(4-methyl-6-tert-butylphenol), 4,4-butylidenebis(3-methyl-6-tert-butyl-phenol), 4,4'-thiobis(3methyl-6-tert-butylphenol), stearyl-beta-(3,5-di-tert-butyl-4hydroxyphenol)propionate, 1,3,5-tris-(3,5-di-tert-butyl-4hydroxybenzyl)isocyanurate, 2,4-bis(n-octylthio)-6-(4hydroxy-3,5-di-tert-butylanilino)-1,3,5-triazine, 2,4-bis(4hydroxy-3,5-di-tert-butylphenoxy)-6-(n-octylthio)-1,3,5triazine and so forth.

The sulfur type antioxidant employed in the present invention can be a sulfide, especially an ester of sulfide carboxylic acid or an ester of a hydroxyl-substituted sulfide, and preferred examples of the ester of the sulfide carboxylic acid include dimyristyl thiodipropionate, distearyl thiodipropionate, dilauryl thiodipropionate, lauryl stearyl thiodipropionate, diabietyl thiodipropionate, etc.

The fatty acid ester of the neopentyl type polyhydric alcohol employed in accordance with the present invention can be, for example, an ester or partial ester of pentaerythritol, trimethylolpropane, trimethylolethane, neo-penetyl glycol, dipentaerythritol, dineopentyl glycol or the like, either alone or as mixtures thereof, with a saturated fatty acid having 6 to 22, preferably 12 to 18, carbon atoms, for exmaple, lauric acid, tridecylic acid, myristic acid, pentadecylic acid, palmitic acid, heptadecylic acid, stearic acid or the like, either alone or as a mixture thereof.

The fatty acid ester of the neopentyl type polyhydric alcohol may be in the structure of either a complete ester in which all the hydroxyl groups in the alcohol are ester bonded or a partial ester in which a part of the hydroxyl groups are ester bonded, or a mixture thereof, among which especially preferred is a single ester which is a di- or higher ester or a mixture the average degree of esterification of which equals to a diester or higher. A representative example of the fatty acid ester of the neopentyl type polyhydric alcohol used in the present invention is stearic acid ester of pentaerylthritol.

The mixing proportion of the polyolefin and the inorganic filler in the thermally stable polyolefin composition in accordance with the present invention is about 5 to about 150 parts by weight, preferably 25 to 100 parts by weight, of the inorganic filler per 100 parts by weight of the polyolefin. Further, the mixing proportion of the hindered phenol type antioxidant, the sulfur type antioxidant and the fatty acid ester of the neopentyl type polyhydric alcohol is preferably about 0.01 to about 5 parts by weight, and especially about 0.02 to about 2 parts by weight, of the hindered phenol type antioxidant, preferably about 0.02 to about 10 parts by weight, and especially about 0.03 to about 4 parts per weight, of the sulfur type antioxidant and preferably about 0.05 to about 5 parts by weight, especially about 0.2 to about 2 parts by weight of the fatty acid ester of the neopentyl type polyhydric alcohol are used per 100 parts by weight of a mixture of the polyolefin and the inorganic filler.

The thermally stable polyolefin composition in accordance with the present invention may be obtained by mixing and kneading the aforementioned polyolefin, inorganic filler, hindered phenol type antioxidant, sulfur type antioxidant and fatty acid ester of the neopentyl type polyhydric alcohol at the above-specified mixing proportion. The kneading method, for example, the order of mixing and the manner of mixing, is not especially restricted and conventional kneading methods may be applied. For example, a method to simultaneously mix the respective ingredients using a mixer such as a Henschel mixer, twin-cylinder mixer, ribbon blender, tumbler, etc. and melt knead the resulting mixture using a Banbury mixer, monoaxial or multi-axial extruder, etc., is employed on the industrial basis. Alternatively, it is also possible to employ a method to add the inorganic filler and the fatty acid ester of the neopentyl type polyhydric alcohol to a composition obtained by melt kneading the polyolefin and the antioxidants, and mix them, followed by melt kneading, or a method to mix and melt knead the fatty acid ester of the neopentyl type polyhydric alcohol, the respective antioxidants and a part of the polyolefin to obtain a composition and successively add the remainder of the polyolefin and the inorganic filler thereto, followed by melt kneading.

The composition in accordance with the present invention can contain other additives conventionally employed for polyolefins, such as a pigment, ultraviolet absorber, antistatic agent, neutralizing agent, etc.

The polyolefin compositions of this invention can be employed in the manufacture of articles for use in the automotive industry, such as fender filler plates, fan belt shields and in the appliance industry, such as for fan blades for dishwashers and the like.

The present invention will be more particularly described in the following Examples and Comparative Examples.

Examples 1-3 and Comparative Examples 1-4

One hundred parts by weight of a crystalline polypropylene powder having a melt flow rate of 11.0 was mixed with 67 parts by weight of a talc powder of an average particle diameter of 12$\nu$, and 100 parts by weight each of this mixture was mixed with a hindered phenol type antioxidant [1,3,5-tris(3,5-di-tert-butyl-4-hydroxybenzyl)isocyanurate], a sulfur type antioxidant (dimyristyl thiodipropionate) and stearic acid ester of pentaerythritol (main component: stearic acid diester) at the mixing proportion specified in Table 1, followed by mixing in a Henschel mixer. Each of the resulting mixtures was melt kneaded using an extruder having a screw diameter of 40 mm at 230° to form pellets. The pellets were molded on a compression press under the conditions of 230° for 5 minutes to prepare a sheet of 2 mm in thickness. A test

0032627

strip of 1 cm x 5 cm was cut from this sheet and measured for heat stability in a gear oven adjusted to a temperature of 160°. The heat stability was evaluated by the days until cracks appeared on the surface. The results are given in Table 1.

Table 1

| | Antioxidant (PHR) | | Stearic Acid Ester of Pentaerythritol (PHR) | Heat Stability, Time to Crack Appearance at 160°C (days) |
|---|---|---|---|---|
| | Hindered Phenol Type | Sulfur Type | | |
| Example 1 | 0.025 | 0.075 | 0.25 | 8 |
| Example 2 | 0.025 | 0.075 | 0.50 | 10 |
| Example 3 | 0.025 | 0.075 | 1.00 | 12 |
| Comparative Example 1 | 0.025 | 0.075 | - | 0.5 |
| Comparative Example 2 | 0.05 | 0.15 | - | 3 |
| Comparative Example 3 | 0.10 | - | 0.25 | 3 |
| Comparative Example 4 | - | - | 0.50 | 0.5 or less |

0032627

- 8 -    0032627

From the foregoing Examples and Compositions Examples, it is evident that the compositions in accordance with the present invention have excellent heat stability.

Examples 4-6 and Comparative Examples 5 & 6

Test strips were prepared in the same manner as in Example 1, except that the amounts of the respective antioxidants incorporated in Examples 1-3 and the amount of the stearic acid ester of pentaerythritol in Comparative Example 3 were changed to those specified in Table 2, and its test strips were measured for heat stability; the results are given in Table 2.

| | Antioxidant (PHR) | | Stearic Acid Ester of Pentaerythritol (PHR) | Heat Stability, Time to Crack Appearance at 160°C (days) |
| --- | --- | --- | --- | --- |
| | Hindered Phenol Type | Sulfur Type | | |
| Example 4 | 0.10 | 0.30 | 0.25 | 26 |
| Example 5 | 0.10 | 0.30 | 0.50 | 35 |
| Example 6 | 0.10 | 0.30 | 1.00 | 41 |
| Comparative Example 5 | 0.10 | 0.30 | - | 11 |
| Comparative Example 6 | - | - | 1.00 | 0.5 or less |

As shown above, it is clear that the compositions in accordance with the present invention have superior heat stability as compared with those in which either of the respective antioxidants or the stearic acid ester of pent-aetythritol is incorporated in higher amounts.

Examples 7-9 and Comparative Examples 7-9

Test strips were prepared in the same manner as in Example 1, except that tetrakis[methylene-3-(3',5'-di-tertbutyl-4'-hydroxyphenyl)propionate] methane and distearyl thiodipropionate were employed as the hindered phenol type antioxidant and the sulfur type antioxidant respectively in amounts specified in Table 3, and measured for heat stability, the results of which are given in Table 3.

Table 3

| | Antioxidant (PHR) | | Stearic acid Ester of Pentaerythritol (PHR) | Heat Stability, Time to Crack Appearance at 160°C (days) |
|---|---|---|---|---|
| | Hindered Phenol Type | Sulfur Type | | |
| Example 7 | 0.05 | 0.15 | 0.25 | 9 |
| Example 8 | 0.05 | 0.15 | 0.50 | 20 |
| Example 9 | 0.05 | 0.15 | 1.00 | 30 |
| Comparative Example 7 | 0.05 | 0.15 | - | 0.5 |
| Comparative Example 8 | 0.10 | - | 0.50 | 4 |
| Comparative Example 9 | - | 0.40 | 1.0 | 2 |

As shown above, it is clear that the compositions in accordance with the present invention have superior heat stability as compared with that having only the antioxidants incorporated or those having the stearic acid ester of pentaerythritol and one antioxidant incorporated.

Comparative Examples 10 & 11

Test strips were prepared in the same manner as in Example 1, except that the stearic acid ester of pentaerythritol used in Example 1 was replaced by stearic acid monoglyceride and that distearyl thiodipropionate was employed as the sulfur type antioxidant. Amounts were as specified in Table 4. When the text strips were measured for heat stability, the results given in Table 4 were obtained.

## Table 4

| | Antioxidant (PHR) | | Stearic Acid Monoglyceride (PHR) | Heat Stability, Time to Crack Appearance at 160°C (days) |
| | Hindered Phenol Type | Sulfur Type | | |
|---|---|---|---|---|
| Comparative Example 10 | - | - | 0.50 | 0.5 or less |
| Comparative Example 11 | 0.05 | 0.15 | 0.50 | 4 |

As shown above, those test strips in which stearic acid monoglyceride which is not a fatty acid ester of a neopentyl type polyhydric alcohol is incorporated, either alone or in combination with the antioxidants, are inadequate in improving heat stability.

CLAIMS                           0032627

1.  A thermally stable polyolefin composition
comprising a polyolefin and an inorganic filler
characterized by stabilizing amounts of each of (A)
a hindered phenol type antioxidant, (B) a sulfur type
antioxidant and (C) a fatty acid ester of neopentyl
type polyhydric alcohol.

2.  A thermally stable polyolefin composition
according to claim 1 characterized in the (A), (B)
and (C) are present in amounts of:  from 0.01 to 5
parts by weight of (A), from 0.02 to 10 parts by
weight of (B) and from 0.5 to 5 parts by weight of (C),
respectively per 100 parts by weight of the polyolefin
and inorganic filler.

3.  A thermally stable polyolefin composition
according to claim 1 or 2 characterized in that the
polyolefin is a homopolymer or copolymer of one or more
alphaolefins having from 2 to 6 carbon atoms.

4.  A thermally stable polyolefin composition
according to claim 3 characterized in that said polyolefin
is a copolymer.

5.  A thermally stable polyolefin composition
according to claim 3 characterized in that the polyolefin
is crystalline polypropylene.

6.  A thermally stable composition according to any
of claims 1 to 5 characterized in that the fatty acid
ester of a neopentyl type polyhydric alcohol is a stearic
acid ester of pentaerythritol.

7.  A stabilized polyolefin composition of any of
claims 1 to 6 characterized in that the hindered phenol
type antioxidant is (1,2,5-tris(3,4-di-tert-butyl-4-hydro-
xylbenzyl) isocyanurate).

8. A stabilized polyolefin composition according to any of claims 1 to 7 characterized in that the sulfur type antioxidant is dimyrystyl thiodipropionate.

9. A thermally stable composition according to any of claims 1 to 6 and 8 characterized in the hindered phenol type antioxidant is tetrakis (methylene 3-(3',5'-di-tert-butyl-4'-hydroxyphenyl)proprionate) methane.

10. A process for thermally stabilizing a polyolefin composition comprising a polyolefin and at least one organic filler, characterized by incorporating into the composition stabilizing amounts of each of a hindered phenol type antioxidant (b) a sulfur type antioxidant and (c) a fatty acid ester of a neopentyl type polyhydric alcohol.

11. A process according to claim 10 characterized in that (A), (B) and (C) are incorporated in amounts of: from 0.01 to 5 parts by weight of (A), from 0.02 to 10 parts by weight of (B) and from 0.5 to 5 parts by weight of (C), respectively per 100 parts by weight of the polyolefin and inorganic filler.